# EUROPÄISCHE PATENTANMELDUNG

(11) **EP 1 674 511 A1**
(43) Veröffentlichungstag der Anmeldung: **28.06.2006**
(21) Anmeldenummer: 04030730.8
(22) Anmeldetag: 23.12.2004
(51) Int. Cl.: C08K 3/00, C08G 73/10, F01D 5/28, C09D 7/12

(54) **Kunststoff enthaltend Nanopartikel und daraus hergestellte Beschichtungen**

(71) Anmelder: SIEMENS AKTIENGESELLSCHAFT, 80333 München (DE)
(72) Erfinder: Goldschmidt, Dirk, Dr., 47445 Moers (DE); Oechsner, Matthias, Dr., 45481 Mühlheim an der Ruhr (DE); Ott, Michael, Dr., 45478 Mühlheim an der Ruhr (DE); Pickert, Ursula, 45470 Mühlheim an der Ruhr (DE); Schumann, Eckart, Dr., 45468 Mühlheim an der Ruhr (DE); Seiler, Beate, 45481 Mühlheim an der Ruhr (DE); Steinbach, Jan, Dr., 13353 Berlin (DE); Vosberg, Volker, Dr., 45476 Mühlheim an der Ruhr (DE)

(57) **Zusammenfassung**

Kunststoffe weisen für bestimmte Anwendungsgebiete nicht die erforderlichen mechanischen oder erosiven Eigenschaften auf.

Der erfindungsgemäße Kunststoff mit Pulverpartikeln (7) verbessert die Eigenschaften des Kunststoffs bezüglich der mechanischen Kennwerte und der erosiven Eigenschaften für Bauteile, Beschichtungen und Dichtungssysteme.

## Beschreibung

Die Erfindung betrifft einen Kunststoff mit Pulverpartikeln und daraus gefertigte Bauteile, Beschichtungen oder Dichtungssysteme gemäß den Ansprüchen 1, 15, 16 oder 17.

Kunststoffe weisen gegenüber anderen Materialien wie z. B. Stahl, Legierungen oder Keramiken den Vorteil des geringeren spezifischen Gewichts und der besseren Herstellbarkeit und Bearbeitbarkeit auf.

Der Einsatz von Kunststoff in Turbinen ist aus der DE 38 02 774 C2 und der DE 42 42 851 A1 bekannt.

Die DE 197 51 129 C1 offenbart eine Rotorschaufel, bei der die Schaufelvorderkante aus Metall gefertigt ist und der restliche Teil des Schaufelblattes aus faserverstärktem Kunststoff besteht, sodass ein Teil des Schaufelblattes aus einer metallischen Oberfläche besteht.

Die DE 198 59 477 A1 offenbart eine Turbinenschaufel, bei der das Schaufelblatt aus Kunststoff bestehen kann und die eine Verschleißschutzschicht aufweist.

Es ist daher Aufgabe der Erfindung, einen Kunststoff als Werkstoff aufzuzeigen, der verbesserte mechanische Eigenschaften und/oder erhöhten Widerstand gegen Erosion und Korrosion aufweist.

Die Aufgabe wird gelöst durch einen Kunststoff mit Pulverpartikeln gemäß Anspruch 1.

Weitere Aufgabe der Erfindung ist es, ein Bauteil, eine Beschichtung und ein Dichtungssystem aufzuzeigen, die ein geringes Gewicht und gute mechanische Eigenschaften sowie einen hohen Widerstand gegen Korrosion und Erosion aufweisen.

Die Aufgabe wird gelöst durch ein Bauteil, eine Beschichtung und Dichtungssystem insbesondere aus einem Kunststoff mit Pulverpartikeln gemäß Anspruch 15, 16 oder 17.

In den Unteransprüchen sind weitere vorteilhafte Maßnahmen aufgelistet, die beliebig in vorteilhafter Art und Weise miteinander kombiniert werden können.

Es zeigen
- Figur 1 bis 7: erfindungsgemäße Kunststoffe, Bauteile, Beschichtungen oder Dichtungssysteme
- Figur 8: eine Turbinenschaufel,
- Figur 9: eine Gasturbine und
- Figur 10: eine Dampfturbine.

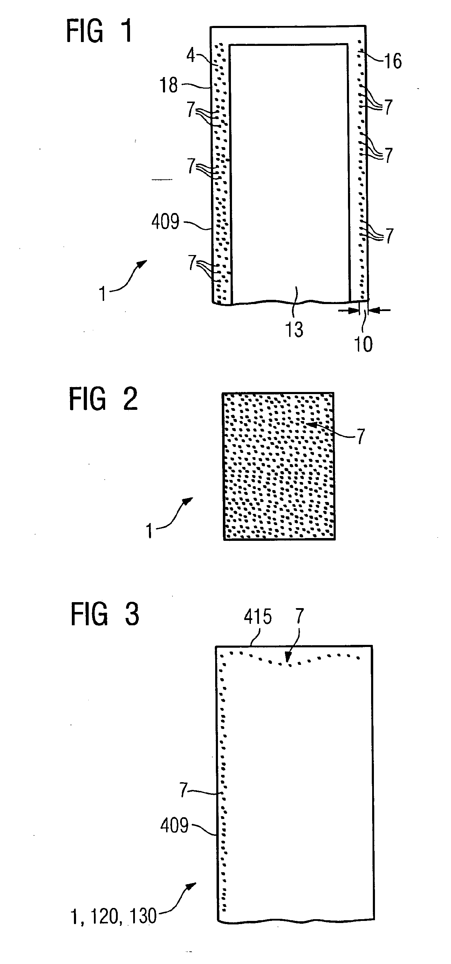

Der erfindungsgemäße Werkstoff besteht aus Kunststoff, also einem Polymer, in dem Pulverpartikel 7 (Figur 2), insbesondere Nanopartikel verteilt oder eingebettet sind. Die Pulverpartikel bestehen zum Teil oder vollständig aus Nanopartikeln.
Bezüglich der Auswahl des Kunststoffs besteht keinerlei Beschränkung. Der Kunststoff kann je nach Einsatzgebiet eines Bauteils 1 (Figur 1, 2) ausgewählt werden, der für den Einsatz des Bauteils 1 zweckmäßig erscheint, wie z.B. Polyimide, z. B. Aurum (Markenname), Polybezimidazol oder Polybenzimidazol, der beispielsweise eine Dauergebrauchstemperaturbeständigkeit bis 300°C aufweist.
Die Polymere umfassen beispielsweise auch Thermoplaste.

Eine organische Farbe mit Pulverteilchen (zur Farbgebung) ist nicht von der Erfindung umfasst.
Ausgeschlossen von der Erfindung sind auch Pulverpartikel als Bestandteile, die zur Farbgebung dem Kunststoff zugegeben werden.
Der erfindungsgemäße Kunststoff enthält keine Füllstoffe, die noch eine Reaktion eingehen, um beispielsweise ein Monomer in ein Polymer umzuwandeln, wie es aus einer Broschüre zu 3M ESPE bekannt ist, und umfasst nicht den Fall, dass die Pulverpartikel einen Katalysator darstellen.
Ebenso wenig sind Gemische (Schlicker) aus Pulver, Lösungsmittel und Binder (anorganisches Material) gemeint, da in diesem Fall das Pulver die Matrix stellt und der Binder entfernt wird.

Das Kunststoff-Pulverpartikelgemisch kann natürlich in pulverisierter Form vorliegen, wobei der Kunststoff die Pulverpartikel 7 umschließt oder mit den Pulverpartikeln 7 vermischt ist.

Die Pulverpartikel 7 sind chemisch inert und sind beispielsweise rund, oval oder blockig (d.h. eckig, quaderförmig, Polyeder)
Die Pulverpartikel 7 stellen eine Zweitphase in einer Matrix aus Kunststoff dar, d.h. bestehend aus einem anderen Material als der Kunststoff, der die Matrix darstellt, wobei der Kunststoff insbesondere mindestens 50vol%, 60vol% oder 70vol%, 80vol% oder 90vol% des Kunststoff-Pulvergemisches aufweist und vorzugsweise Anteile zwischen 50 bis 90vol%, 50 bis 80vol%, 60 bis 90vol%, 50 bis 70vol%, 60 bis 80vol%, 80 bis 90vol%, 50 bis 60vol%, 60 bis 70vol%, 70 bis 80vol%, 80 bis 90vol% oder 90 bis 99vol% aufweist.
Somit dient der Kunststoff nicht dem Zusammenhalten von Pulverteilchen, wie es z. B. von Magneten bekannt ist, die aus einem Kunststoff und magnetischen oder magnetisierbaren Pulverteilchen bestehen. Insbesondere starke Magneten aus einer spröden Legierung zerbrechen leicht, sodass man Pulverteilchen nimmt, die nur durch den Kunststoff zusammengehalten werden, der aber nicht die Matrix bildet.

Die Nanopartikel weisen Korngrößen kleiner 500nm, insbesondere kleiner 300nm, 100nm oder 50nm auf.
Die Pulverpartikel 7 können aus Metall, Keramik oder aus einem anderen Kunststoff sowie aus Gemischen von Metall, Keramik oder Kunststoff bestehen. Glasstaub ist dabei von der Erfindung nicht umfaßt.
Die Pulverpartikel 7 können in dem Kunststoff eingebettet sein oder aus dem Kunststoff herausragen und gegebenenfalls auch eine großflächige Beschichtung bilden.
Soll der Kunststoff erhöhte mechanische Kennwerte aufweisen, so wird beispielsweise ein faserverstärkter Kunststoff (FC) mit Pulverpartikeln 7 verwendet.

Hohle oder massive Bauteile 1 können aus dem erfindungsgemäßen Kunststoff hergestellt werden, wobei die Pulverpartikel 7 im Inneren zur Erhöhung der inhärenten Bauteildämpfung dienen.

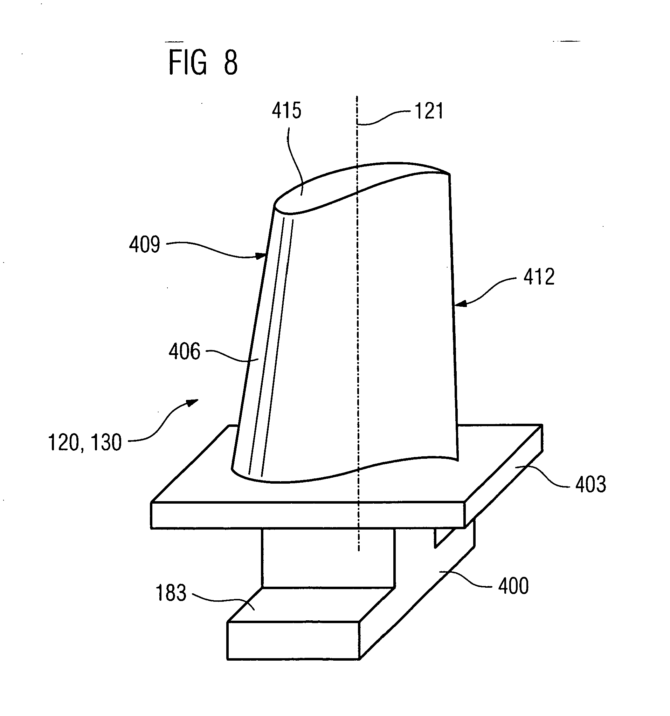

Figur 1 zeigt ein erfindungsgemäßes Bauteil 1, das beispielsweise hohl ausgeführt ist und einen Hohlraum 13 aufweist. Der erfindungsgemäße Kunststoff bildet eine äußere Wand 4, 16 des Bauteils 1.
In diesem Ausführungsbeispiel sind die Pulverpartikel 7 beispielsweise in der gesamten Dicke der vorderen äußeren Wand 4 verteilt, die beispielsweise eine Anströmkante 409 (Fig. 8) einer Schaufel 120, 130 für eine Strömungsmaschine, einen Kompressor 105 oder Turbine 100 darstellt.
Die Anströmkante 409 oder allgemein besonders belastete Oberflächenbereiche eines Bauteils 1 weisen die Pulverpartikel 7 auf, weil durch sie die mechanischen Eigenschaften und/oder die Erosionseigenschaften des Kunststoffs verbessert werden. Ebenso können die Pulverpartikel 7 aus der Oberfläche 18 der Wand 4 herausragen, um so die Erosionseigenschaften oder den Strömungswiderstand des Bauteils 1 zu verbessern. Dafür können die Pulverpartikel 7 auch nur im oberflächennahen Bereich 10 konzentriert sein.
In der hinteren Wand 16 des Bauteils 1 sind die mechanischen und erosiven Belastungen geringer, sodass entweder keine Pulverpartikel oder nur im oberflächennahen Bereich 10 der Wand 16 Pulverpartikel 7 zugemischt sind.
Die Pulverpartikel 7 können also lokal verteilt in dem Kunststoff auftreten, also ihre Konzentration kann einen Gradienten aufweisen.

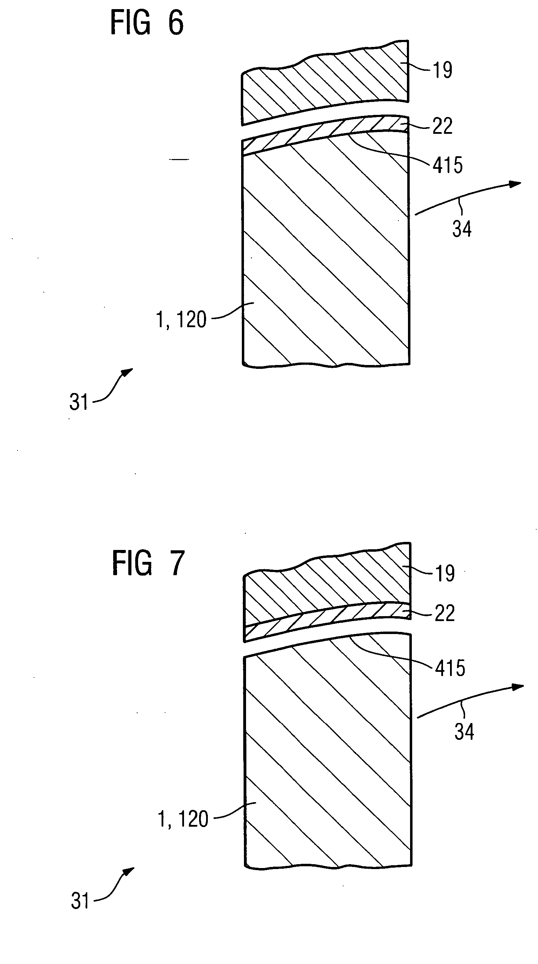

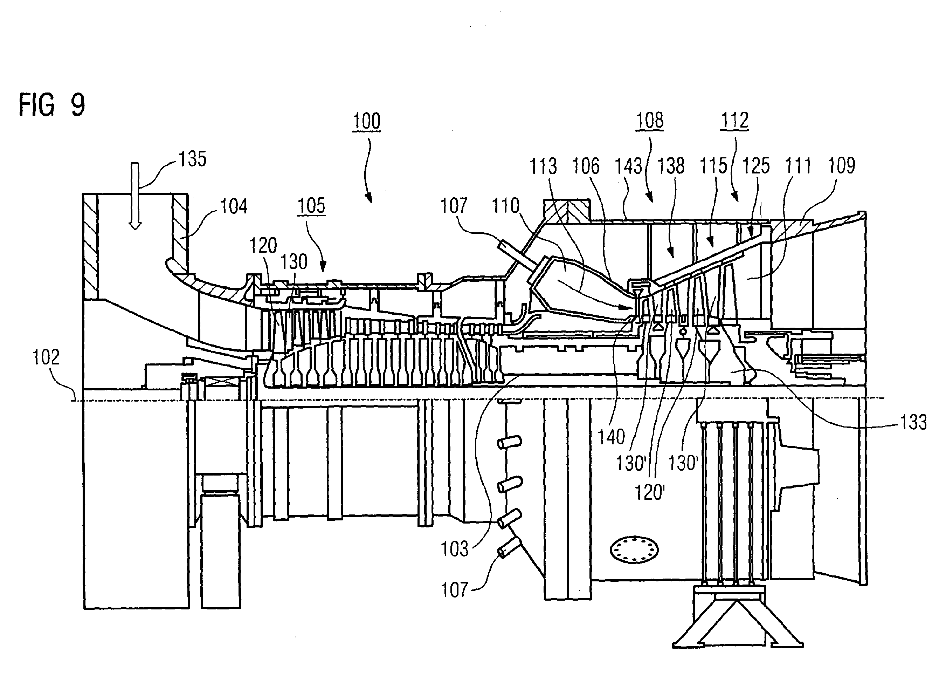

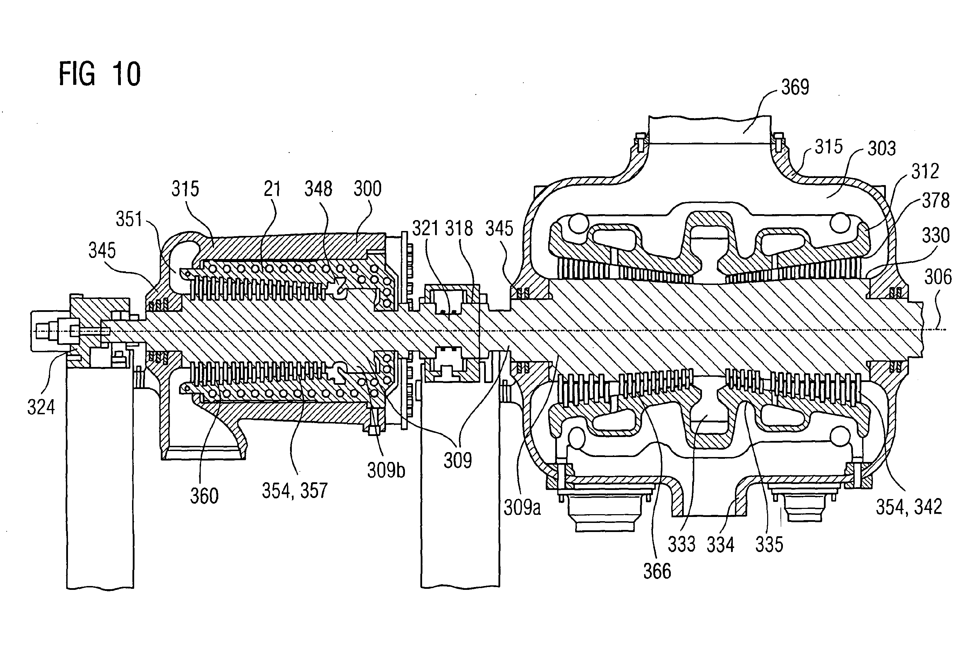

Die Schaufel 120, 130 kann für Windkraftanlagen, Kompressoren 105, Pumpen, Dampf- 300, 303 (Fig. 7)- oder Gasturbinen 100 (Fig. 9) oder Dampfturbinen (Fig. 10) jeglicher Größe verwendet werden.
Insbesondere bei den immer größer werdenden Gasturbinen 100 führt die Verwendung des im Vergleich zu Stahl oder anderen metallischen Werkstoffen leichten Kunststoffs zu einer erheblichen Gewichtsreduzierung, sodass der Rotor 103 (Fig. 9) einer Dampf- 300, 303 oder Gasturbine 100, obwohl er größer wird, leichter sein kann, sodass der Wirkungsgrad steigt und ein schnelles An- und Abfahren ermöglicht wird.

Figur 3 zeigt ein massives Bauteil 1, beispielsweise eine Turbinenschaufel 120, 130.

In dem Bauteil 1, 120, 130 können die Pulverpartikel 7 homogen verteilt sein (Fig. 2) oder sind wie in Figur 3 dargestellt nur in den Randbereichen 10 vorhanden, in denen eine hohe mechanische und/oder erosive Belastung auftritt. Dies sind im Falle einer Turbinenschaufel die Anströmkante 409 und die Schaufelspitze 415.

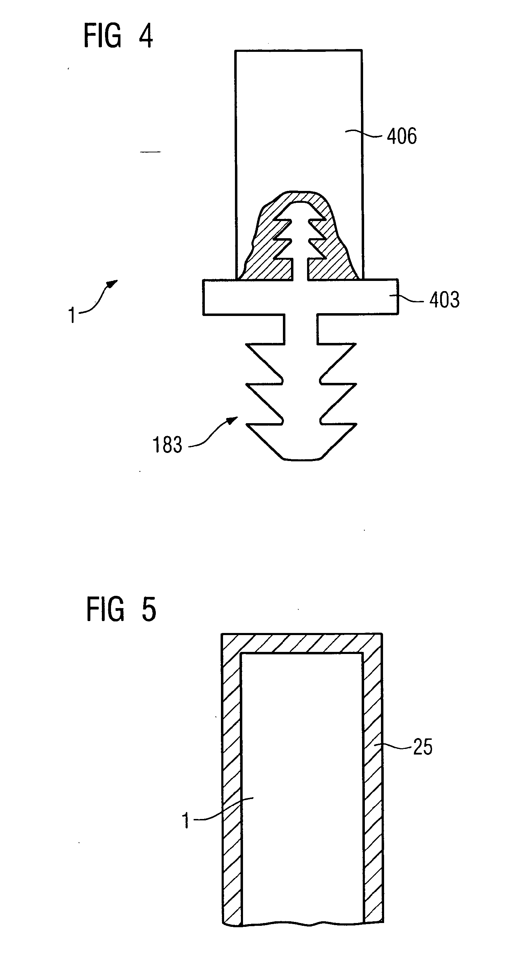

Das Bauteil 1 kann auch ein Hybridbauteil (Fig. 4) sein, d.h. der erfindungsgemäße Kunststoff ist noch mit einem Bauteilstück aus einem anderen Werkstoff verbunden. Dies bedeutet beispielsweise im Falle der Turbinenschaufel 120, 130, dass das Schaufelblatt 406, insbesondere die gesamte Oberfläche des Schaufelblatts 406 aus dem erfindungsgemäßen Kunststoff besteht und der Schaufelfuß 183 (Fig. 8) aus Metall.

Figur 5 zeigt ein Bauteil 1, beispielsweise eine Schaufel eines Kompressors 105, die zum Schutz gegen Korrosion und/oder Erosion eine Beschichtung 25 aus einem Kunststoff, gegebenenfalls faserverstärkt, insbesondere aus einem Kunststoff mit den Pulverpartikeln 7 aufweist.
Auch hier können die Pulverpartikel 7 hinsichtlich ihrer Verteilung über den Bauteilquerschnitt einen örtlichen Gradienten aufweisen und/oder aus der Oberfläche herausragen.

Figur 6 zeigt einen Teil eines beispielhaften Dichtungssystems 31.
Das Dichtungssystem 31 besteht aus zumindest einer Laufschaufel 120, die sich in Umfangsrichtung 34 bewegt.
Auf der Schaufelspitze 415 ist lokal eine Dichtungsbeschichtung 22 aus einem Kunststoff, gegebenenfalls faserverstärkt, insbesondere aus einem Kunststoff mit Pulverpartikeln 7 aufgebracht, die die Laufschaufel 120 gegenüber einem Gehäuse 19 abdichtet.
Die Laufschaufel 120 kann dabei aus den handelsüblichen Werkstoffen, insbesondere aus Stahl- oder Eisenlegierungen für Laufschaufeln eines Kompressors 105 oder Turbinenschaufeln einer Dampfturbine bestehen.
Kunststoffbeschichtungen sind einfach zu entfernen und wieder aufzubringen.

In Figur 7 ist ebenfalls ein Dichtungssystem 31 gezeigt, bei dem jedoch die Dichtungsbeschichtung 22 aus oben genannten Kunststoffen nicht auf der Schaufelspitze 415 der Laufschaufel 120 aufgebracht ist, sondern auf dem der Schaufelspitze 415 gegenüberliegenden Bereich des Gehäuses 19.
Bei dem Dichtungssystem 31 gemäß Figur 6 oder 7 schneidet sich das Bauteil mit dem härteren Material in das weichere Material ein, so dass der Abstand zwischen Schaufel und Gehäuse absolut minimiert ist.

Ebenso kann sowohl auf dem Gehäuse 19 als auch auf der Schaufelspitze 415 eine Dichtungsbeschichtung 22 aus Kunststoff vorhanden sein.
Weiterhin kann die Laufschaufel 120 auch aus massivem Kunststoff gemäß Figur 1, 3 oder 4 bestehen.

Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine 100 eines Flugzeugs oder eines Kraftwerks zur Elektrizitätserzeugung, eine Dampfturbine 300, 303 oder ein Kompressor sein.

Die Schaufel 120, 130 weist entlang der Längsachse 121 aufeinander folgend einen Befestigungsbereich 400, beispielsweise eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt) .

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Der metallische Teil der Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Die Schaufel 120, 130 kann hohl oder massiv ausgeführt sein.

Die Figur 9 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105 (Kompressor), eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130' sind dabei an einem Innengehäuse 138 eines Stators 143 befestigt, wohingegen die Laufschaufeln 120' einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Der Verdichter (Kompressor) kann Schaufeln 120, 130 aus dem erfindungsgemäßen Kunststoff aufweisen. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130' und den Laufschaufeln 120. An den Laufschaufeln 120' entspannt sich das Arbeitsmedium 113 impulsübertragend, so dass die Laufschaufeln 120' den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130' und Laufschaufeln 120' der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120', 130' und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind Teil der Offenbarung.

Ebenso können die Schaufeln 120', 130' Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130' weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

In Figur 10 ist beispielhaft eine Dampfturbine 300, 303 mit einer sich entlang einer Rotationsachse 306 erstreckenden Turbinenwelle 309 dargestellt.

Die Dampfturbine weist eine Hochdruck-Teilturbine 300 und eine Mitteldruck-Teilturbine 303 mit jeweils einem Innengehäuse 312 und einem dieses umschließende Außengehäuse 315 auf.

Die Hochdruck-Teilturbine 300 ist beispielsweise in Topfbauart ausgeführt.
Die Mitteldruck-Teilturbine 303 ist zweiflutig ausgeführt. Es ist ebenfalls möglich, dass die Mitteldruck-Teilturbine 303 einflutig ausgeführt ist.
Entlang der Rotationsachse 306 ist zwischen der Hochdruck-Teilturbine 300 und der Mitteldruck-Teilturbine 303 ein Lager 318 angeordnet, wobei die Turbinenwelle 309 in dem Lager 318 einen Lagerbereich 321 aufweist. Die Turbinenwelle 309 ist auf einem weiteren Lager 324 neben der Hochdruck-Teilturbine 300 aufgelagert. Im Bereich dieses Lagers 324 weist die Hochdruck-Teilturbine 300 eine Wellendichtung 345 auf. Die Turbinenwelle 309 ist gegenüber dem Außengehäuse 315 der Mitteldruck-Teilturbine 303 durch zwei weitere Wellendichtungen 345 abgedichtet. Zwischen einem Hochdruck-Dampfeinströmbereich 348 und einem Dampfaustrittsbereich 351 weist die Turbinenwelle 309 in der Hochdruck-Teilturbine 300 die Hochdruck-Laufbeschaufelung 354, 357 beispielsweise aus dem erfindungemäßen Kunststoff in der Schaufelreihe, die Temperatur aushalten muss, die mit den maximal möglichen Einsatztemperaturen kompatibel ist, auf. Diese Hochdruck-Laufbeschaufelung 354, 357 stellt mit den zugehörigen, nicht näher dargestellten Laufschaufeln einen ersten Beschaufelungsbereich 360 dar. Die Mitteldruck-Teilturbine 303 weist einen zentralen Dampfeinströmbereich 333 auf. Dem Dampfeinströmbereich 333 zugeordnet weist die Turbinenwelle 309 eine radialsymmetrische Wellenabschirmung 363, eine Abdeckplatte, einerseits zur Teilung des Dampfstromes in die beiden Fluten der Mitteldruck-Teilturbine 303 sowie zur Verhinderung eines direkten Kontaktes des heißen Dampfes mit der Turbinenwelle 309 auf. Die Turbinenwelle 309 weist in der Mitteldruck-Teilturbine 303 einen zweiten Beschaufelungsbereich 366 mit den Mitteldruck-Laufschaufeln 354, 342 auf. Der durch den zweiten Beschaufelungsbereich 366 strömende heiße Dampf strömt aus der Mitteldruck-Teilturbine 303 aus einem Abströmstutzen 369 zu einer strömungstechnisch nachgeschalteten, nicht dargestellten Niederdruck-Teilturbine.

## Patentansprüche

1. Kunststoff mit Pulverpartikeln (7).

2. Kunststoff nach Anspruch 1,
**dadurch gekennzeichnet, dass**
alle oder zumindest ein Teil der Pulverpartikel (7) Nanopartikel sind.

3. Kunststoff nach Anspruch 1 oder 2,
**dadurch gekennzeichnet, dass**
die Pulverpartikel (7) zumindest teilweise aus Metall sind.

4. Kunststoff nach Anspruch 1, 2 oder 3,
**dadurch gekennzeichnet, dass**
die Pulverpartikel (7) zumindest teilweise aus Keramik sind.

5. Kunststoff nach Anspruch 1, 2, 3 oder 4,
**dadurch gekennzeichnet,**
**dass** der Kunststoff aus einem ersten Kunststoffmaterial, und dass die Pulverpartikel (7) zumindest teilweise aus einem zweiten Kunststoffmaterial bestehen.

6. Kunststoff nach Anspruch 1, 2, 3, 4 oder 5,
**dadurch gekennzeichnet, dass**
der Kunststoff faserverstärkt ist.

7. Kunststoff nach einem oder mehreren der vorherigen Ansprüche, **dadurch gekennzeichnet, dass**
der Volumenanteil des Kunststoffs mindestens 50% beträgt.

8. Kunststoff nach einem oder mehreren der vorherigen Ansprüche, **dadurch gekennzeichnet, dass**
der Volumenanteil des Kunststoffs mindestens 60% beträgt.

9. Kunststoff nach einem oder mehreren der vorherigen Ansprüche, **dadurch gekennzeichnet, dass**
der Volumenanteil des Kunststoffs mindestens 70% beträgt.

10. Kunststoff nach einem oder mehreren der vorherigen Ansprüche, **dadurch gekennzeichnet, dass**
der Volumenanteil des Kunststoffs mindestens 80% beträgt.

11. Kunststoff nach einem oder mehreren der vorherigen Ansprüche, **dadurch gekennzeichnet, dass**
der Volumenanteil des Kunststoffs mindestens 90% beträgt.

12. Kunststoff nach einem oder mehreren der Ansprüchen 1-5,
**dadurch gekennzeichnet, dass**
die Pulverpartikel (7) rund sind.

13. Kunststoff nach einem oder mehreren der Ansprüchen 1-5,
**dadurch gekennzeichnet, dass**
die Pulverpartikel (7) blockig sind.

14. Kunststoff nach einem oder mehreren der Ansprüchen 1-5,
**dadurch gekennzeichnet, dass**
die Pulverpartikel (7) chemisch inert gegenüber dem Kunststoff sind.

15. Bauteil (1) aus einem Kunststoff gemäß einem oder mehreren der Ansprüche 1 bis 14.

16. Beschichtung (25) für ein Bauteil (1) gegen Korrosion und/oder Erosion,
insbesondere für eine Turbinenschaufel (120, 130),
**dadurch gekennzeichnet, dass**
die Beschichtung (25) aus einem faserverstärkten Kunststoff oder
einem Kunststoff nach einem oder mehreren der Ansprüche 1 bis 14 besteht.

17. Dichtungssystem (31),
zumindest bestehend aus Laufschaufeln (120) und einem Gehäuse (19),
insbesondere eines Kompressors oder einer Turbine,
wobei Laufschaufeln (120) und Gehäuse (19) gegeneinander abgedichtet werden,
**dadurch gekennzeichnet, dass**
eine Dichtungsbeschichtung (22) auf den Laufschaufeln (120) und/oder auf dem Gehäuse (19) aus einem Kunststoff, aus einem faserverstärkten Kunststoff oder
aus einem Kunststoff nach einem oder mehreren der Ansprüche 1 bis 14,
besteht.

18. Bauteil oder Beschichtung nach Anspruch 15 oder 16,
**dadurch gekennzeichnet, dass**
das Bauteil (1) eine Lauf- oder Leitschaufel (120, 130), insbesondere für einen Kompressor (105),
insbesondere für eine Gasturbine (100), oder eine Dampfturbine (300, 303) darstellt.

19. Bauteil Anspruch 15,
**dadurch gekennzeichnet, dass**
das Bauteil (1) ein Hybridbauteil ist,
wobei ein Teilstück (406) aus Kunststoff mit einem anderen Bauteilstück (183) verbunden ist,
das aus einem anderen Material,
insbesondere aus Metall besteht.

20. Bauteil, Beschichtung oder Dichtungssystem nach einem oder mehreren der vorherigen Ansprüche 15 bis 19,
**dadurch gekennzeichnet,**
**dass** die Pulverpartikel (7) im Kunststoff nur lokal vorhanden sind,
insbesondere dass die Konzentration der Pulverpartikel (7) in dem Kunststoff einen Gradienten aufweist.

21. Bauteil, Beschichtung oder Dichtungssystem nach Anspruch 20, **dadurch gekennzeichnet, dass**
die Pulverpartikel (7) nahe oder auf einer Oberfläche (18) konzentriert sind.

22. Dichtungssystem nach Anspruch 17,
**dadurch gekennzeichnet, dass**
die Turbinenschaufel (120) mit der Dichtungsbeschichtung (22) ersetzt ist durch eine Turbinenschaufel (120),
die zumindest im Schaufelblatt (406) aus einem faserverstärkten Kunststoff oder einem Kunststoff gemäß einem oder mehreren der Ansprüche 1 bis 14 besteht.

23. Kunststoff, Bauteil, Beschichtung oder Dichtungssystem nach einem oder mehreren der vorherigen Ansprüche,
**dadurch gekennzeichnet, dass**
der Kunststoff ein Polyimid,
insbesondere ein Polybezimidazol ist.
